# EUROPEAN PATENT APPLICATION

(11) **EP 4 501 135 A1**
(43) Date of publication of application: **05.02.2025**
(21) Application number: 23779117.3
(22) Date of filing: 27.02.2023
(51) Int. Cl.: A23L 27/10, A23G 1/48, A23C 11/00, A23L 5/00, A23L 7/104

(54) **FLAVORING AGENT**

(30) Priority: 31.03.2022 JP 2022058714
(71) Applicant: Fuji Oil Holdings Inc., Izumisano-shi, Osaka 598-8540 (JP)
(72) Inventor: MOTOIKE, Hideki, Tsukubamirai-shi, Ibaraki 300-2436 (JP); SUGIYAMA, Masahiro, Tsukubamirai-shi, Ibaraki 300-2436 (JP); MIYAZAKI, Chiaki, Tsukubamirai-shi, Ibaraki 300-2436 (JP)
(74) Representative: Boult Wade Tennant LLP
(86) International application number: PCT/JP2023/006953
(87) International publication number: WO 2023/189087

(57) **Abstract**

An object of the present application is to provide a flavoring agent capable of complementing body and richness that are reduced when a milk raw material is replaced with a vegetable raw material, especially a flavoring agent usable as a milk substitute. Another object of the present application is to provide an oil-based food having a good flavor using a milk substitute. The objects of the present application can be solved by subjecting a seed of a gramineous plant to protease treatment and preparing an oil-based food using the obtained protease-treated product and an inorganic salt.

## Description

### Technical Field

The present invention relates to a flavoring agent and a method for producing the same.

### Background Art

Milk raw materials such as milk, fresh cream, and skimmed milk powder have a peculiar milk flavor and are preferred. Therefore, milk raw materials are widely used in dairy products, western confectionery, breads, desserts, and the like, as well as in applications such as flavoring for cooking and adding body and richness.

Meanwhile, under the background of increasing preference for animal-food-free diet, concern about milk allergy, and rising prices of milk raw materials, development of vegetable raw materials that can substitute for animal milk raw materials has also been conducted.

As for beverages, dairy products, and the like, substitutes produced using pulse crops such as soybeans have been disclosed (Patent Documents 1 and 2).

Apart from people who do not eat dairy products as a dietary preference or because of milk allergy, lactose intolerance patients are restricted from ingesting foods containing dairy products. They cannot completely digest lactose in the body and should avoid foods produced using dairy products containing lactose.

As described above, for people who intentionally avoid ingesting dairy products and for economic or social reasons, efforts to substitute milk raw materials with vegetable raw materials have been increasing.

Many taste-improving agents and the like for adding taste and body to foods have been studied (Patent Document 3). They are amino acids and components generated by heating amino acids, and adjust the taste and body of the food as a whole.

### Citation List

### Patent Documents

Patent Document 1: JP 2013-013395 A
Patent Document 2: JP S57-033547 A
Patent Document 3: JP 2013-252113 A

### Summary of invention

### Technical Problem

The present inventors have studied flavoring agents using pulse crops such as soybeans as described in Patent Documents 1 and 2 in the background art. However, when an oil-based food or the like is prepared using such a flavoring agent, particularly when the food contains the flavoring agent as a milk substitute in a large amount, peculiar stickiness or gooey feeling in the mouth is felt, and the melt-in-the-mouth may be deteriorated.

In addition, when a milk raw material was replaced with a vegetable raw material in the study, peculiar body and richness derived from the milk raw material were reduced in some cases. In order to reinforce the reduced body and richness by the enzyme treatment as described in Patent Document 3, heating or roasting is required, which is complicated in terms of equipment.

Accordingly, an object of the present invention is to provide a flavoring agent capable of complementing body and richness that are reduced when a milk raw material is replaced with a vegetable raw material, to provide a milk substitute as a flavoring agent capable of replacing a milk raw material, and to provide a food containing the flavoring agent or the milk substitute. Another object is to provide an oil-based food having good melt-in-the-mouth, milk taste, and body using the milk substitute.

### Solution to Problem

As a result of intensive studies, the present inventors have found that a seed of a gramineous plant that has been subjected to protease treatment can be used as a food flavoring agent, particularly as a milk substitute.

Specifically, the present invention relates to:
(1) A method for producing a flavoring agent, the method including subjecting a seed of a gramineous plant to protease treatment in an environment having a moisture content of 70 mass% or less and at from 20°C to 80°C;
(2) The method for producing a flavoring agent according to (1), wherein the gramineous plant is one or more selected from the group consisting of sorghum, barley, wheat, white rice, and brown rice;
(3) The method for producing a flavoring agent according to (1) or (2), wherein a protease is one or more selected from the group consisting of a neutral protease, an acid protease, an alkaline protease, and a peptidase;
(4) The method for producing a flavoring agent according to (1) or (2), wherein the flavoring agent is a milk substitute;
(5) The method for producing a flavoring agent according to (3), wherein the flavoring agent is a milk substitute;
(6) A milk substitute obtained by subjecting a seed of a gramineous plant to protease treatment in an environment having a moisture content of 70 mass% or less and at from 20°C to 80°C;
(7) The milk substitute according to (6), wherein the gramineous plant is one or more selected from the group consisting of sorghum, barley, wheat, white rice, and brown rice;
(8) The milk substitute according to (6) or (7), wherein a protease used in the protease treatment is one or more selected from the group consisting of a neutral protease, an acid protease, an alkaline protease, and a peptidase;
(9) An oil-based food containing the milk substitute according to (6) or (7);
(10) An oil-based food containing the milk substitute according to (8);
(11) An oil-based food containing the milk substitute according to (6) or (7), the oil-based food being free of a milk raw material;
(12) An oil-based food containing the milk substitute according to (8), the oil-based food being free of a milk raw material;
(13) The oil-based food according to (11), which is chocolates;
(14) The oil-based food according to (12), which is chocolates;
(15) The oil-based food according to (11), containing an inorganic salt;
(16) The oil-based food according to (12), containing an inorganic salt; and
(17) The oil-based food according to (13), containing an inorganic salt.

In other words, the present invention provides:
(1) A method for producing a flavoring agent, the method including subjecting a seed of a gramineous plant to protease treatment in an environment having a moisture content of 70 mass% or less and at from 20°C to 80°C;
(2) The method for producing a flavoring agent according to (1), wherein the gramineous plant is one or more selected from the group consisting of sorghum, barley, wheat, white rice, and brown rice;
(3) The method for producing a flavoring agent according to (1) or (2), wherein a protease is one or more selected from the group consisting of a neutral protease, an acid protease, an alkaline protease, and a peptidase;
(4) The method for producing a flavoring agent according to any one of (1) to (3), wherein the flavoring agent is a milk substitute;
(5) A milk substitute obtained by subjecting a seed of a gramineous plant to protease treatment in an environment having a moisture content of 70 mass% or less and at from 20°C to 80°C;
(6) The milk substitute according to (5), wherein the gramineous plant is one or more selected from the group consisting of sorghum, barley, wheat, white rice, and brown rice;
(7) The milk substitute according to (5) or (6), wherein a protease used in the protease treatment is one or more selected from the group consisting of a neutral protease, an acid protease, an alkaline protease, and a peptidase;
(8) An oil-based food containing the milk substitute according to any one of (5) to (7);
(9) An oil-based food containing the milk substitute according to any one of (5) to (7), the oil-based food being free of a milk raw material;
(10) The oil-based food according to (9), which is chocolates; and
(11) The oil-based food according to (9) or (10), containing an inorganic salt.

### Advantageous Effects of Invention

According to the present invention, it is possible to provide a flavoring agent capable of complementing body and richness that are reduced when a milk raw material is replaced with a vegetable raw material. In addition, it is possible to provide a milk substitute as a flavoring agent capable of replacing a milk raw material, and to provide a food containing the flavoring agent or the milk substitute. Furthermore, it is possible to provide an oil-based food having good melt-in-the-mouth, milk taste, and body using the milk substitute.

The flavoring agent of the present invention is not limited to a milk substitute, and can be used for adding body and richness to foods.

### Description of embodiments

In one aspect of the present invention, it is possible to provide a flavoring agent obtained by subjecting a seed of a gramineous plant to protease treatment. It is possible to provide an oil-based food having good melt-in-the-mouth, milk taste, and body using the obtained protease-treated product.

The seed of a gramineous plant used in the present invention is not particularly limited, and examples thereof include rice, sorghum, wheat, barley, rye, oat, corn, foxtail millet, barnyard millet, and common millet. The gramineous plant may be a non-glutinous plant or a glutinous plant. The gramineous plant may be a polished plant or a non-polished plant. In a more specific embodiment, the seed of a gramineous plant is one or more selected from the group consisting of sorghum, barley, wheat, white rice, and brown rice.

The protease used in the present invention can be appropriately selected from proteases classified into, for example, "acid proteases", "neutral proteases", "alkaline proteases", "metal proteases", "thiol proteases", "serine proteases" and the like, irrespective of whether it is derived from animals, plants, or microorganisms. As another example of classification, the protease can be appropriately selected from proteases classified into "endo-proteases", "exo-proteases", "peptidases" and the like. One of these proteases may be used, or a plurality of these proteases may be used in combination. Furthermore, a preparation having one or more of these enzyme activities may be used. The protease may be, but does not have to be used in combination with an enzyme other than the protease. In addition, the preparation may have, but does not have to have an enzyme activity other than that of the protease. In a specific embodiment, the protease is one or more selected from the group consisting of a neutral protease, an acid protease, an alkaline protease, and a peptidase.

More specific examples of the protease used in the present aspect include acid proteases derived from microorganisms such as genus Aspergillus, genus Penicillium, and genus Rhizopus; neutral proteases derived from microorganisms such as genus Aspergillus, genus Streptomyces, and genus Bacillus; alkaline proteases derived from microorganisms such as genus Aspergillus, genus Streptomyces, and genus Bacillus; plant-derived proteases such as bromelain and papain; and animal-derived proteases such as trypsin, chymotrypsin, and subtilisin. These proteases may be used in any combination. In a more specific embodiment, the protease used in the present aspect is a protease derived from the genus Bacillus, such as a protease derived from Bacillus amyloliquefaciens and a protease derived from Bacillus licheniformis.

Examples of commercially available proteases that can be used in the present aspect include Protease A, Protease M, Protease P, Protease M "Amano" SD, Protease N, Protease NL, Protease S, Umamizyme, Peptidase R, Newlase A, Newlase F, Samoase PC10F, Samoase GL30, Papain W40, Protin SD-NY10, and Protin SD-AY10 (all manufactured by Amano Enzyme Inc.), Sumizyme AP, Sumizyme LP, Sumizyme MP, Sumizyme FP, and Sumizyme LPL (all manufactured by SHINNIHON CHEMICALS Corporation), Denapsin 2P, Denazyme AP, XP-415, Bioplase XL-416F, Bioplase SP-4FG, and Bioplase SP-15FG (all manufactured by Nagase ChemteX Corporation), Molsin F, PD-enzyme, IP-enzyme, and AO-protease (all manufactured by Kikkoman Corporation), PANCIDASE YP-SS, PANCIDASE NP-2, and PANCIDASE P (all manufactured by Yakult Pharmaceutical Industry Co., Ltd.), Flavourzyme, Alloase, Protamex, Neutrase, and Alcalase (all manufactured by Novozymes A/S), and Kokulase SS and Kokulase P granules (both manufactured by Mitsubishi Chemical Corporation), and one, or two or more of these enzymes may be selected from these and used.

The amount of the protease used is not particularly limited, and can be arbitrarily determined by a person skilled in the art according to the used raw materials and the desired flavor. The amount of the protease used varies according to the titer or the like and cannot be said unconditionally, but in one embodiment, the amount of the protease used is in the range of from 0.01 to 100% with respect to the mass of the seed of a gramineous plant. In a specific embodiment, the amount of the protease or a protease preparation used is from 0.1 to 10 mass%, for example, from 0.25 to 9 mass%, from 0.5 to 8 mass%, from 1 to 7 mass%, or from 2 to 6 mass% with respect to the seed of a gramineous plant.

In another specific aspect, the amount of the protease used may be such that the amount of the protease in the preparation is from 0.1 to 10 mass%, for example, from 0.25 to 9 mass%, from 0.5 to 8 mass%, or from 1 to 7 mass% with respect to the seed of a gramineous plant.

The conditions of the protease treatment are not particularly limited, and can be arbitrarily determined by a person skilled in the art according to the kind of the enzyme used and the like. In one embodiment, the treatment temperature is from 20 to 80°C, for example, from 40 to 75°C or from 45 to 70°C, and the treatment time is from 30 minutes to 24 hours, for example, from 1 to 16 hours, from 2 to 12 hours, or from 3 to 9 hours.

One of the characteristics of the conditions of the protease treatment according to the present invention is that the moisture content during the enzyme treatment is 70 mass% or less. When the moisture content is high, the enzyme reaction may easily proceed. However, after the completion of the enzyme reaction, drying may take a long time, or the application of the product to foods may be limited. The moisture content during the protease treatment of the present invention is 70 mass% or less, preferably 65 mass% or less, and more preferably 60 mass% or less.

The moisture content during the protease treatment of the present invention is preferably 5 mass% or more, more preferably 8 mass% or more, and still more preferably 10 mass% or more.

The treated product obtained by the protease treatment may be subjected to drying treatment. Examples of the drying treatment include heat drying, ventilation drying, freeze drying, spray drying, and fluidized bed drying. In one embodiment, the treated product obtained by the protease treatment is dried at a drying temperature of from 35 to 75°C, for example, from 40 to 70°C or from 42 to 65°C for a drying time of from 1 to 50 hours, for example, from 3 to 40 hours, from 5 to 35 hours, or from 8 to 30 hours.

The treated product obtained by the protease treatment may be treated in a specific temperature range before the drying treatment. For example, the treated product may be treated at 60 to 80°C for 2 to 5 hours. The treatment may further improve the flavor. In addition, the treatment can deactivate the enzyme.

The gramineous plant serving as a raw material of the protease-treated product may be mixed with a non-protease-treated gramineous plant. The non-protease-treated gramineous plant to be mixed may be of the same or different kind from the protease-treated gramineous plant. In addition, one or more kinds of the protease-treated gramineous plants and one or more kinds of the non-protease-treated gramineous plants may be mixed.

The flavoring agent of the present aspect is obtained by performing the steps defined above.

Other raw materials may be added to the flavoring agent of the present aspect as long as the function of the flavoring agent is not impaired, but such other raw materials do not have to be added. Examples of such other raw materials include seasonings, acidulants, sweeteners, spices, colorants, flavors, salts, sugars, antioxidants, vitamins, stabilizers, thickeners, carriers, excipients, lubricants, surfactants, propellants, preservatives, chelating agents, and pH adjusters. In one embodiment, the method of the present aspect includes a step of adding the above-mentioned other raw materials.

The form of the flavoring agent of the present aspect is not particularly limited, and examples thereof include solids such as powders, granules, and pellets; semi-solids such as pastes; and liquids such as solutions, suspensions, and emulsions. In a specific embodiment, the flavoring agent of the present aspect is in the form of a powder. In one embodiment, the method of the present aspect includes a step of making the flavoring agent into the above-mentioned form.

In one embodiment, the flavoring agent of the present aspect can be used as a raw material of food and drink. For example, the flavoring agent of the present aspect can be added to a beverage such as water, milk, or soybean milk to produce a beverage. In addition, for example, the flavoring agent of the present aspect can be mixed as a confectionery material with raw materials such as sugars and an oil and/or fat to produce confectionery. In addition, for example, the flavoring agent of the present aspect can be added to a food to add body and richness to the flavor of the food.

In the present invention, the term "flavoring agent" refers to a material capable of adding body and richness when used in a food. It is possible to provide a flavoring agent capable of complementing body and richness that are reduced particularly when a milk raw material is replaced with a vegetable raw material.

In addition, the flavoring agent of the present invention can be used as a milk substitute capable of replacing a milk raw material, and it is possible to provide an oil-based food having good melt-in-the-mouth, milk taste, and body using the milk substitute.

In the present invention, the term "body" refers to a robust taste that is felt when a food is eaten or drunk, and the term "richness" refers to a lasting robust taste that lasts until the food is consumed in the mouth.

The term "good melt-in-the-mouth" refers to a state in which the oil-based food can be smoothly melted and eaten without becoming sticky in the mouth.

In the present invention, the term "milk substitute" refers to a flavoring agent capable of replacing milk raw materials such as whole milk powder and skimmed milk powder. The milk substitute of the present invention can provide good melt-in-the-mouth, milk taste, and body particularly when used in oil-based foods.

In the present invention, the term "oil-based food" refers to a food in which an oil and/or fat forms a continuous phase, and examples thereof include chocolates, butter creams, and spreads. In the present invention, the term "chocolates" may collectively refer to "pure chocolate", "chocolate", and "quasi-chocolate" as defined by the Japan National Chocolate Industry Fair Trade Council, "chocolate-like foods" composed of an oil and/or fat other than cocoa butter and an edible material other than cocoa solids, and foods other than those described above, for example, curry flavor or cheese flavor foods containing an edible material dispersed in an oil and/or fat used as a base.

Examples of the oil and/or fat that can be used in the oil-based foods and the chocolates include, in addition to cocoa butter, various animal and vegetable oils and/or fats such as high erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid triglycerides (MCTs), shea butter, sal fat, cocoa butter substitute fat, babassu oil, milk fat, beef tallow, lard, fish oil, and whale oil, as well as hardened oils, fractionated oils, and transesterified oils thereof.

In one embodiment, the content of the flavoring agent of the present aspect as a milk substitute in chocolates can be arbitrarily determined by a person skilled in the art according to the flavor. In a specific embodiment, the content is 35 mass% or less, for example, from 1 to 30 mass% or from 3 to 25 mass%.

In the present invention, the term "oil-based food free of a milk raw material" refers to an oil-based food that does not substantially contain a milk component or a milk component derived from another animal. The term "milk raw material" or "milk component" refers to any dairy product contained in known milk chocolates and the like. Examples of the milk raw material include, but are not limited to, whole milk powder, skimmed milk powder, cream, milk fat (including anhydrous milk fat), and milk (that may be concentrated and is sweetened).

Chocolates free of a milk raw material does not substantially contain the above-mentioned milk raw materials, and can be prepared by appropriately combining cocoa mass and cocoa powder with cocoa butter, vegetable oils and/or fats, sugars such as white sugar, plant-derived powder raw materials, emulsifiers, flavors, and the like.

The phrase "does not substantially contain" means that the mass of the relevant component is less than 1 mass%.

The inorganic salt in the present invention is not particularly limited as long as it is an inorganic salt acceptable as a food. Examples of a sodium salt include sodium chloride, sodium citrate, sodium succinate, sodium gluconate, and sodium tartrate. Examples of a potassium salt include potassium chloride, potassium phosphate, potassium gluconate, potassium citrate, and potassium malate. Examples of a calcium salt include calcium lactate, calcium phosphate, calcium gluconate, calcium citrate, calcium malate, and calcium chloride. Examples of a magnesium salt include magnesium chloride and magnesium sulfate. Two or more kinds of inorganic salts may be used in combination.

The amount of the inorganic salt added is preferably from 0.05 to 1 mass% in the oil-based food. The content is more preferably from 0.08 to 0.8 mass%, and still more preferably from 0.1 to 0.6 mass%. With such a preferable content of the inorganic salt, when the flavoring agent of the present invention is used in an oil-based food, good milk taste can be felt.

There is no particular limitation on the operation of adding the inorganic salt, and the inorganic salt can be added during the preparation of the oil-based food or during the protease treatment.

The oil-based food of the present invention may be produced in accordance with a common method for producing chocolates. For example, the oil-based food can be prepared by subjecting a raw material blend to atomization and mixing operations with a roll refiner by a common method. The raw material blend contains, in addition to cocoa raw materials (cocoa mass, cocoa, and cocoa butter) and the flavoring agent of the present invention, the above-mentioned oil and/or fat, and if necessary, auxiliary raw materials such as sugars, milk powders, dietary fibers, fruit juice powders, fruit powders, taste materials, emulsifiers, flavors, and colorants at an arbitrary ratio. The production method is not limited as long as the method includes pulverization and mixing steps, and for example, the oil-based food can also be prepared by a production method including pulverization and mixing steps using a ball mill.

The sweetener used can be any known sweetener, and for example, one or more selected from sugars such as white sugar, glucose, fructose, isomerized sugar, starch syrup, trehalose, maltitol, and sorbitol, as well as aspartame, stevia, glycyrrhizin, thaumatin, and the like are suitable.

The flavoring agent of the present invention can also be used in foods other than oil-based foods. In one embodiment, the flavoring agent of the present aspect can be used as a raw material of food and drink. For example, the flavoring agent of the present aspect can be added to a beverage such as water, milk, or soybean milk to produce a beverage. In addition, for example, the flavoring agent of the present aspect can be mixed as a confectionery material with raw materials such as sugars and an oil and/or fat to produce confectionery. In addition, for example, the flavoring agent of the present aspect can be added to a food to add body and richness to the food.

### Examples

Hereinafter, the present invention will be described in more detail with reference to examples of the present invention, but the spirit of the present invention is not limited to the following examples. In the examples, % and parts are both meant to be on a mass basis.

### • Study 1

### (Enzyme Reaction)

White sorghum was pulverized into powder, or powdery white sorghum was used.

To 10 g of the powder, 7.5 g of water and one of various enzyme preparations shown in Table 1 at a proportion of 0.5 g (5% relative to the powder) were added, followed by mixing.

The resulting mixture was reacted at 50°C for 8 hours as shown in Table 1.

After the reaction, the mixture was dried in a dryer at 45°C for 15 hours.

For drying, an electric dryer Petit Mini (TAIKI SANGYO CO., LTD.) was used.

### (Flavor Evaluation 1)

A mixed liquid was prepared by dispersing 1.38 g of each of the various powders of enzyme-treated white sorghum obtained in the above-mentioned (Enzyme Reaction) in 30 g of hot water, and the flavor of the mixed liquid was evaluated. For comparison, white sorghum subjected to heat treatment at 50°C for 8 hours and drying but not subjected to enzyme reaction was used as a control.

The flavor was evaluated by sensory evaluation by three trained panelists according to the following criteria, and the average was used as the final evaluation.

### <Body and Richness>

Score 5: Strong body is felt. Richness is added.
Score 4: Body is felt. Slight richness.
Score 3: Richness is weak, but body is felt.
Score 2: Both body and richness are hardly felt.
Score 1: Neither body nor richness is felt.

### <Milk Taste>

Score 5: Milk taste is felt well. Flavor like skimmed milk.
Score 4: Milk taste is felt.
Score 3: Slightly weak milk taste is felt.
Score 2: Milk taste is weak.
Score 1: No milk taste is felt.

In each evaluation, a mixed liquid having a score of 3 or more was satisfactory, and judged to have an effect as a flavoring agent or a milk substitute.

### (Flavor Evaluation 2)

Each of the various powders of enzyme-treated white sorghum obtained in the above-mentioned (Enzyme Reaction) was mixed with cocoa, powdered sugar, a melted oil and/or fat, and lecithin according to the composition shown in Table 2, and the resulting mixture was finely pulverized in a ball mill and liquefied to give an oil-based food.

The oil-based foods were molded with a mold and the flavors were evaluated. For comparison, white sorghum subjected to heat treatment at 50°C for 8 hours and drying but not subjected to enzyme reaction was used as a control.

As for the ball mill, Shake Master Auto, a stainless steel ball mill manufactured by -Biomedical Science Co., Ltd. was used for the treatment.

The treatment temperature during the fine pulverization in the ball mill is not particularly limited, but was from 40°C to 65°C at which the melted state of the oil and/or fat can be maintained in actual measurement.

As for the cocoa, commercially available alkali-treated cocoa having an oil content of 11% was used.

Parkena S (manufactured by FUJI OIL CO., LTD.) was used as the oil and/or fat.

The flavor was evaluated by sensory evaluation by three or five trained panelists according to the following criteria.

### <Milk Taste*>

Score 5: Milk taste* is felt well. Good milk chocolate-like flavor.
Score 4: Milk taste* is felt. Milk chocolate-like flavor.
Score 3: Slightly weak milk taste* is felt.
Score 2: Milk taste* is weak.
Score 1: No milk taste* is felt. No milk chocolate-like flavor.

An oil-based food having a score of 3 or more had acceptable quality, and the powder was judged to have an effect as a milk substitute in the oil-based food.

In order to distinguish the written expression, the milk taste according to (Flavor Evaluation 2) in the examples is expressed as "milk taste*". In particular, milk taste reminiscent of milk chocolate is expressed as "milk taste*".

**Table 1]**

| | Enzyme species | Reaction conditions | Moisture content during reaction [%] | (Flavor Evaluation 1) Body and richness | (Flavor Evaluation 1) Milk taste |
|---|---|---|---|---|---|
| Comparative Example 1 | None (control) | 50°C 8 hours | 42.0 | 1.0 | 1.0 |
| Example 1 | Neutral protease¹ | | 42.0 | 5.0 | 4.0 |
| Example 2 | Alkaline protease² | | 42.0 | 3.3 | 3.0 |
| Example 3 | Acid protease³ | | 42.0 | 3.7 | 3.0 |
| Example 4 | Protease⁴ | | 42.0 | 5.0 | 4.0 |
| Example 5 | Protease⁵ | | 42.0 | 3.0 | 3.0 |

| | | | | | |
|---|---|---|---|---|---|
| 1: Neutrase 0.8 L (Novozymes A/S), 2: Sumizyme MP (SHINNIHON CHEMICALS Corporation), 3: Sumizyme AP (SHINNIHON CHEMICALS Corporation), 4: Protamex (Novozymes A/S), 5: Protease M "Amano" SD (Amano Enzyme Inc.) | | | | | |

The treated product of each example that had been subjected to the protease treatment had an effect as a flavoring agent capable of adding body and richness.

Oil-based foods were prepared according to (Flavor Evaluation 2) using the flavoring agent of Example 1 that particularly added body and richness and the flavoring agent of Comparative Example 1, and the flavors such as milk taste* were evaluated.

The composition of the oil-based foods is shown in Table 2. The results of (Flavor Evaluation 2) are shown in Table 3.

**[Table 2]**

| Used raw materials | Content % |
|---|---|
| Each enzyme-treated product | 10.0% |
| Cocoa | 10.0% |
| Powdered sugar | 34.5% |
| Vegetable oil and/or fat | 45.3% |
| Lecithin | 0.2% |

**[Table 3]**

| | Enzyme species | (Flavor Evaluation 2) Milk taste* |
|---|---|---|
| Comparative Example 1 | None (control) | 1.0 |
| Example 1 | Neutral protease | 3.0 |

In (Flavor Evaluation 1), the mixed liquid of Example 1 had body and richness. However, in (Flavor Evaluation 2), the oil-based food of Example 1 had body, but had slightly weak milk taste*.

In both the example and the comparative example, the melt-in-the-mouth was good without stickiness.

### •Study 2

A method for further adding milk taste* to a prepared oil-based food was studied.

Consideration was made to investigate whether addition of an organic acid, an inorganic salt, or yeast to an oil-based food could add body and richness peculiar to milk to the oil-based food, and the study of (Flavor Evaluation 2) was performed using the flavoring agent obtained in Example 1.

Sodium glutamate was used as the organic acid.

Sodium chloride was used as the inorganic salt.

Malt extract powder was used as a material containing yeast.

In the composition of the oil-based food shown in Table 2, powdered sugar was replaced with the organic acid, inorganic salt, or yeast so that each of the components was contained in an amount of 0.45% in the oil-based food. The results of (Flavor Evaluation 2) are shown in Table 4.

**[Table 4]**

| | Added component | Enzyme species | Proportion in oil-based food [%] | (Flavor Evaluation 2) Milk taste* |
|---|---|---|---|---|
| Example 1 | None | Neutral protease | 0 | 3.0 |
| Example 6 | Sodium glutamate | Neutral protease | 0.45 | 3.0 |
| Example 7 | Sodium chloride | Neutral protease | 0.45 | 5.0 |
| Example 8 | Malt extract powder | Neutral protease | 0.45 | 3.0 |

Addition of the organic acid or yeast did not increase milk taste* in (Flavor Evaluation 2). However, by the addition of the inorganic salt, milk taste* was strongly felt, and the oil-based food had a milk chocolate-like flavor. In addition to milk taste*, body was also strongly felt. In all the production examples, no stickiness was felt and good melt-in-the-mouth was obtained.

In addition to the enzymes shown in Table 1 and used in Study 1, amylases and the like shown in Table 5 were used as comparative examples, and study was made with the addition of sodium chloride as an inorganic salt. In the same manner as in Study 1, water, an enzyme preparation, and sodium chloride were added to powdery white sorghum, and the above-mentioned (Enzyme Reaction) was performed. The moisture content during (Enzyme Reaction) was standardized at 41%. In the comparative examples, the reaction was performed at 55°C for 8 hours.

The products were evaluated according to (Flavor Evaluation 1) and (Flavor Evaluation 2). Sodium chloride was added during (Enzyme Reaction) so as to be contained in an amount of 0.45% in each of the oil-based foods in (Flavor Evaluation 2).

The evaluation results are shown in Table 5. In the table, NaCl represents sodium chloride.

**[Table 5]**

| | Enzyme species | (Flavor Evaluation 1) Body and richness | (Flavor Evaluation 1) Milk taste | NaCl in oil-based food [%] | (Flavor Evaluation 2) Milk taste* |
|---|---|---|---|---|---|
| Comparative Example 1' | None (control) | 2.7 | 2.0 | 0.45 | 1.0 |
| Example 1' | Neutral protease | 5.0 | 4.0 | 0.45 | 5.0 |
| Example 2' | Alkaline protease | 3.3 | 3.0 | 0.45 | 4.0 |
| Example 3' | Acid protease | 3.7 | 3.0 | 0.45 | 4.0 |
| Example 4' | Protease | 5.0 | 4.0 | 0.45 | 5.0 |
| Example 5' | Protease | 3.0 | 3.0 | 0.45 | 4.0 |
| Comparative Example 2 | α-Amylase⁶ | 2.0 | 1.7 | 0.45 | 2.3 |
| Comparative Example 3 | Glucoamylase⁷ | 2.7 | 2.2 | 0.45 | 1.3 |
| Comparative Example 4 | Cellulase⁸ | 2.0 | 1.7 | 0.45 | 1.7 |
| Comparative Example 5 | β-Amylase⁹ | 2.7 | 2.2 | 0.45 | 1.7 |

| | | | | | |
|---|---|---|---|---|---|
| 6: UNIASE L (Yakult Pharmaceutical Industry Co., Ltd.), 7: glucoamylase Sumizyme (SHINNIHON CHEMICALS Corporation), 8: Sclase C (Mitsubishi Chemical Corporation), 9: β-Amylase F "Amano" (Amano Enzyme Inc.) | | | | | |

As for the examples, body and richness were equally felt in (Flavor Evaluation 1). The milk taste* of (Flavor Evaluation 2) was improved in the examples. The amylases and the like used in the comparative examples did not have an effect of adding body, richness, and milk taste* of (Flavor Evaluation 2).

The oil-based foods prepared in the examples were not sticky and had good melt-in-the-mouth.

### •Study 3

Treatment was performed in the same manner as in Study 1 using seeds of gramineous plants, beans, and malt powder instead of the white sorghum subjected to (Enzyme Reaction) in Study 1. For (Enzyme Reaction), the protease (Protamex (manufactured by Novozymes A/S)) used in Example 4 was used. The amount of the inorganic salt was adjusted so that sodium chloride was contained in an amount of 0.45% in each of the oil-based foods prepared in (Flavor Evaluation 2). The moisture content during (Enzyme Reaction) was standardized at 41%.

The malt powder was used in trial production for comparison, and was not subjected to (Enzyme Reaction) as in Study 1.

Using the enzyme-treated products obtained in the above-mentioned (Enzyme Reaction) and the malt powder, evaluation of body and richness as (Flavor Evaluation 1) and evaluation of milk taste* and melt-in-the-mouth as (Flavor Evaluation 2) were performed. The results are shown in Table 6.

**[Table 6]**

| | Grain | Enzyme species | (Flavor Evaluation 1) Body and richness | (Flavor Evaluation 2) Milk taste* | (Flavor Evaluation 2) Melt-in-the-mouth |
|---|---|---|---|---|---|
| Example 9 | White sorghum | Protease | 5.0 | 5.0 | Good |
| Example 10 | Barley | Protease | 4.0 | 4.0 | Good |
| Example 11 | Brown rice | Protease | 3.0 | 3.0 | Good |
| Example 12 | Sorghum bicolor | Protease | 4.0 | 4.0 | Good |
| Example 13 | Black sorghum | Protease | 4.0 | 4.0 | Good |
| Example 14 | White rice | Protease | 3.0 | 3.0 | Good |
| Comparative Example 6 | Scarlet runner beans | Protease | 1.0 | 1.0 | Slightly sticky and poor |
| Comparative Example 7 | Malt powder | Protease | 2.0 | 2.0 | Good |

The seeds of the gramineous plants used in the examples added body and richness as flavoring agents. In addition, the seeds of the gramineous plants added milk taste* to the oil-based foods, and the prepared oil-based foods had a milk chocolate-like flavor.

The oil-based foods of the examples that were prepared using the seeds of the gramineous plants had good melt-in-the-mouth. The oil-based food of Comparative Example 6 was slightly sticky.

### • Study 4

Enzyme-treated products were prepared with the amount of the enzyme used being adjusted in the same step as (Enzyme Reaction) of Study 1.

In Example 9-a, the amount of protein in the enzyme preparation was 5 mass% relative to the powder. In the other examples and comparative examples, the amount of the enzyme preparation was adjusted by the proportion relative to the powder. For (Enzyme Reaction), the protease (Protamex (manufactured by Novozymes A/S)) used in Example 4 was used. The moisture content was standardized at 41%.

The amount of the inorganic salt was adjusted so that sodium chloride was contained in an amount of 0.45% in each of the oil-based foods prepared in (Flavor Evaluation 2).

Using the obtained enzyme-treated products, evaluation of body and richness as (Flavor Evaluation 1) and evaluation of milk taste* as (Flavor Evaluation 2) were performed. The results are shown in Table 7.

**[Table 7]**

| | Amount of enzyme preparation [% relative to powder] | (Flavor Evaluation 1) Body and richness | (Flavor Evaluation 2) Milk taste* |
|---|---|---|---|
| Example 9-a | 5.0* | 5.0 | 5.0 |
| | Protein amount in enzyme preparation | | |
| Example 9 | 5.0 | 5.0 | 5.0 |
| Example 15 | 2.5 | 5.0 | 5.0 |
| Example 16 | 1.0 | 4.0 | 4.0 |
| Comparative Example 8 | 0.1 | 1.0 | 2.0 |
| Comparative Example 1 | 0 | 1.0 | 1.0 |

When the amount of the enzyme was small as in the comparative examples, the effect as a flavoring agent was not obtained.

Meanwhile, in the examples, even when the amount of the enzyme preparation was changed, body and richness were felt in (Flavor Evaluation 1), and milk taste* was felt in (Flavor Evaluation 2). Good melt-in-the-mouth was present.

### • Study 5

In order to confirm the effect of inorganic salts other than sodium chloride, (Enzyme Reaction) in which a different kind of inorganic salt was used was performed in the same step as (Enzyme Reaction) of Study 1 using the neutral protease (Neutrase 0.8 L (manufactured by Novozymes A/S)) used in Example 1.

The amount of the inorganic salt added was standardized at 3.6% relative to the powder. The moisture content during (Enzyme Reaction) was standardized at 41%.

Using the obtained enzyme-treated products, evaluation of (Flavor Evaluation 2) was performed. The results are shown in Table 8.

**[Table 8]**

| | Kind of salt | Flavor Evaluation 2 Milk taste* |
|---|---|---|
| Example 17 | Sodium chloride | 5.0 |
| Example 18 | Potassium chloride | 4.3 |
| Example 19 | Magnesium chloride | 4.0 |
| Example 20 | Disodium phosphate | 4.0 |
| Example 21 | Sodium dihydrogen phosphate | 4.0 |
| Example 22 | Sodium gluconate | 4.0 |
| Example 23 | Potassium gluconate | 4.0 |
| Example 24 | Calcium carbonate | 4.0 |

Addition of the inorganic salts added good milk taste* to the oil-based foods. In addition, as for all the enzyme-treated products, body of the oil-based foods was felt.

### •Study 6

Using the neutral protease (Neutrase 0.8 L (manufactured by Novozymes A/S)) used in Example 1, the flavors were compared between the case where sodium chloride was added during the same (Enzyme Reaction) as in Study 1 and the case where sodium chloride was not added during (Enzyme Reaction) but added during preparation of an oil-based food in (Flavor Evaluation 2).

Three kinds each having a content of sodium chloride added in the (Enzyme Reaction) step of 3.6%, 1.8%, and 0% relative to the powder were prepared. The moisture content during (Enzyme Reaction) was standardized at 41%.

To the powder having a sodium chloride content of 0% to which sodium chloride was not added in the (Enzyme Reaction) step, sodium chloride was added during the preparation of an oil-based food so that the amount of sodium chloride [%] in the oil-based food was the same as that of the oil-based food prepared without addition of sodium chloride in the (Enzyme Reaction) step. The amount of powdered sugar in Table 2 was reduced by the amount of sodium chloride added. (Flavor Evaluation 2) was performed using the oil-based foods. The results are shown in Table 9.

In the table, NaCl represents sodium chloride.

**[Table 9]**

| | NaCl amount during (Enzyme Reaction) [% relative to powder] | NaCl addition amount during preparation of oil-based food [%] | NaCl in oil-based food [%] | (Flavor Evaluation 2) Milk taste* |
|---|---|---|---|---|
| Example 25 | 3.6 | 0 | 0.36 | 5.0 |
| Example 26 | 1.8 | 0 | 0.18 | 4.0 |
| Example 27 | 0 | 0.36 | 0.36 | 5.0 |
| Example 28 | 0 | 0.18 | 0.18 | 4.0 |

It was confirmed that milk taste* was added to the oil-based food regardless of whether the timing of adding sodium chloride was during (Enzyme Reaction) or during the preparation of the oil-based food. There was no difference in melt-in-the-mouth, and the oil-based foods had good melt-in-the-mouth.

In addition, when the amount of sodium chloride was reduced to half, the milk taste* tended to be slightly weakened, but the milk taste* was sufficiently felt and the oil-based foods also had good melt-in-the-mouth.

### Industrial Applicability

According to the present invention, it is possible to provide a flavoring agent obtained by subjecting a seed of a gramineous plant to protease treatment, particularly a flavoring agent usable as a milk substitute. It is possible to provide an oil-based food having good melt-in-the-mouth, milk taste, and body using the obtained flavoring agent and an inorganic salt.

## Claims

1. A method for producing a flavoring agent, the method comprising subjecting a seed of a gramineous plant to protease treatment in an environment having a moisture content of 70 mass% or less and at from 20°C to 80°C.

2. The method for producing a flavoring agent according to claim 1, wherein the gramineous plant is one or more selected from the group consisting of sorghum, barley, wheat, white rice, and brown rice.

3. The method for producing a flavoring agent according to claim 1 or 2, wherein the protease is one or more selected from the group consisting of a neutral protease, an acid protease, an alkaline protease, and a peptidase.

4. The method for producing a flavoring agent according to claim 1 or 2, wherein the flavoring agent is a milk substitute.

5. The method for producing a flavoring agent according to claim 3, wherein the flavoring agent is a milk substitute.

6. A milk substitute obtained by subjecting a seed of a gramineous plant to protease treatment in an environment having a moisture content of 70 mass% or less and at from 20°C to 80°C.

7. The milk substitute according to claim 6, wherein the gramineous plant is one or more selected from the group consisting of sorghum, barley, wheat, white rice, and brown rice.

8. The milk substitute according to claim 6 or 7, wherein the protease used in the protease treatment is one or more selected from the group consisting of a neutral protease, an acid protease, an alkaline protease, and a peptidase.

9. An oil-based food comprising the milk substitute according to claim 6 or 7.

10. An oil-based food comprising the milk substitute according to claim 8.

11. An oil-based food comprising the milk substitute according to claim 6 or 7, the oil-based food being free of a milk raw material.

12. An oil-based food comprising the milk substitute according to claim 8, the oil-based food being free of a milk raw material.

13. The oil-based food according to claim 11, which is chocolates.

14. The oil-based food according to claim 12, which is chocolates.

15. The oil-based food according to claim 11, comprising an inorganic salt.

16. The oil-based food according to claim 12, comprising an inorganic salt.

17. The oil-based food according to claim 13, comprising an inorganic salt.
